Europäisches Patentamt

European Patent Office

Office européen des brevets

(19)

(11)  **EP 0 998 165 A1**

## (12) DEMANDE DE BREVET EUROPEEN

(43) Date de publication:
**03.05.2000 Bulletin 2000/18**

(51) Int Cl.7: **H04Q 11/04**

(21) Numéro de dépôt: **99402602.9**

(22) Date de dépôt: **21.10.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **26.10.1998  FR 9813373**

(71) Demandeur: **ALCATEL**
**75008 Paris (FR)**

(72) Inventeurs:
• **Magnier, Anne**
  **75013 Paris (FR)**
• **Peligry, Yves**
  **75004 Paris (FR)**

• **Baudoin, Cédric**
  **31400 Toulouse (FR)**
• **Lapaille, Cédric**
  **78400 Chatou (FR)**
• **Calot, Guillaume**
  **78000 Versailles (FR)**
• **Cohen, Michel**
  **75011 Paris (FR)**
• **Rouffet, Denis**
  **92100 Boulogne Billancourt (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Procédé de transmission de données en mode de transfert asynchrone dans un système de satellites mobile**

(57)  L'invention est relative à un procédé de transmission en mode asynchrone de données numériques composées de cellules dans lequel les ressources en communication de terminaux sont attribuées par une station de commande.

Ce procédé est caractérisé en ce que, la puissance totale affectée aux diverses communications ne devant pas dépasser une valeur déterminée, la puissance ($\Delta p_i$) affectée à chaque cellule émise par un terminal ou par la station de commande est déterminée périodiquement, par exemple à chaque apparition d'une cellule ou à chaque apparition d'un groupe de cellules.

Chaque communication peut ainsi être optimisée en permanence, la ressource en puissance pouvant être gérée comme les autres ressources en communication.

FIG.4

EP 0 998 165 A1

## Description

L'invention est relative à un procédé de transmission de communications numériques en mode asynchrone pour un système de télécommunication dans lequel les ressources en communication de terminaux sont attribuées par une station de commande.

Elle concerne plus particulièrement, mais non exclusivement, un procédé de transmission pour un système dans lequel les communications sont relayées par l'intermédiaire d'équipements à bord d'un satellite mobile sur une orbite.

Pour tirer le meilleur parti d'un système de télécommunication, il est préférable de gérer les informations transmises de manière telle qu'à chaque instant on puisse transmettre un débit d'informations égal au (ou proche du) maximum admissible par le système.

A cet effet, les informations sont transmises sous forme numérique pour limiter le bruit et faciliter la gestion. Le plus souvent, les informations numériques se présentent sous forme de cellules ou paquets qui peuvent être transmis pendant un intervalle de temps donné et ces cellules sont transmises en mode asynchrone, de façon à permettre une répartition dans le temps des cellules qui optimise l'utilisation du système. Par exemple, dans les réseaux dits ATM (Asynchronous Transfer Mode), les cellules, de longueur constante, sont affectées d'une priorité ; celles qui correspondent à des communications en temps réel (par exemple les communications téléphoniques ou les vidéoconférences) sont prioritaires par rapport à celles correspondant à des communications qui ne sont pas en temps réel (par exemple le courrier électronique). Autrement dit, les cellules des diverses communications sont multiplexées et la commande du multiplexage est basée sur la "qualité de service" que l'on attend pour chaque communication, c'est-à-dire d'une qualité de transfert de l'émission vers la réception.

Les paramètres intervenant dans la qualité de service sont, notamment, le temps de retard que l'on peut admettre entre l'émission et la réception, le taux de perte de cellules, le taux d'erreurs binaires, le débit maximum, le débit moyen et la variation du temps de transmission des cellules.

L'invention résulte de la constatation que, pour certains réseaux de communication, une décision d'attribution de ressources basée seulement sur la qualité de service est insuffisante.

En particulier, cette gestion des ressources se révèle insuffisante quand des variations de puissance relativement importantes peuvent intervenir, par exemple du fait de variations de conditions de propagation des signaux, ou de variations de distance entre émetteur et récepteur.

Pour résoudre ce problème, l'invention prévoit de déterminer périodiquement la puissance affectée à chaque cellule. Cette périodicité de la détermination de la puissance affectée à chaque cellule est, dans une réalisation, la durée d'une cellule ou la durée d'un groupe de cellules.

Ainsi, en tenant compte du fait que la puissance totale affectée aux diverses communications ne doit pas dépasser une valeur déterminée Pmax, la puissance peut être gérée comme les autres ressources en communication.

Pour déterminer la puissance affectée à chaque cellule, on détermine la puissance nécessaire par des moyens de mesure classiques. Par exemple, on peut mesurer le rapport signal à bruit à la réception et le comparer à une référence et faire dépendre la puissance de l'émetteur de la différence entre le rapport signal à bruit mesuré et la référence.

Quand on fait dépendre la puissance de chaque cellule des conditions de propagation, la puissance à émettre sera supérieure en cas de pluie qu'en cas de temps clair.

L'invention est particulièrement utile dans le cas d'un système de télécommunication par satellites mobiles, notamment à orbites basses ou moyennes. Dans un tel système, on prévoit une constellation de satellites. A chaque instant, les antennes d'un satellite voient une zone terrestre déterminée (fixe ou mobile) et les équipements à bord de ce satellite sont utilisés pour assurer des communications à l'intérieur de cette zone. Quand le satellite perd de vue la zone en question, un autre satellite de la constellation prend le relais.

Dans un système de ce genre, la distance de chaque point de la zone au satellite varie de façon continue du fait du déplacement de ce dernier. Ces variations de distance entraînent, pour les communications, des variations de puissance qui peuvent provoquer des perturbations. En effet, la puissance d'un signal reçu dépend de la distance entre le lieu d'émission et le lieu de réception ; plus la distance est grande, plus la puissance est faible. La puissance varie aussi en fonction de la position de l'émetteur et du récepteur par rapport au diagramme de réception ou d'émission des antennes correspondantes du satellite.

Dans cette application, on peut faire dépendre la puissance affectée à chaque cellule d'un ou plusieurs des paramètres suivants : la position du satellite sur son orbite, la position de l'organe émetteur dans la zone, la position de l'organe récepteur, les conditions de propagation régnant entre l'organe émetteur et l'organe récepteur, la puissance totale disponible dans des équipements à bord du satellite, et la puissance totale admissible au sol.

Ainsi, quand on fait dépendre la puissance des cellules de la position de l'organe récepteur dans la zone, pour les communications entre une station émettrice se trouvant dans la région centrale de la zone et un organe ou terminal récepteur, la puissance d'émission sera supérieure, pour un organe récepteur en bord de zone, à la puissance d'émission pour un organe récepteur proche de la région centrale. Dans ce cas, la puissance dépend aussi de la position du terminal récepteur par rapport au diagramme d'émission de l'antenne correspondante à bord du satellite.

La puissance disponible dans les équipements à bord du satellite est limitée et, en général, elle peut varier. Une telle variation intervient, par exemple, quand le satellite est affecté à plusieurs zones, car, dans ce cas, la répartition de la puissance totale d'émission entre les zones ainsi couvertes peut être modifiée. En outre, il peut exister des contraintes d'environnement telles qu'il faille limiter la puissance totale reçue en chaque point de la zone. Dans ce cas, la puissance de chaque cellule devra être adaptée pour respecter les limitations et variations de - et les contraintes sur - la puissance.

Dans certains cas, la puissance de chaque cellule pourra dépendre aussi de la puissance attribuée aux cellules émises simultanément sur la même porteuse avec des codes différents, notamment des codes orthogonaux, et/ou sur les autres fréquences porteuses. En particulier, si on utilise des codes orthogonaux et si l'orthogonalité n'est pas parfaite, il est préférable de limiter la dynamique des puissances entre cellules afin que la réception des cellules de faible puissance ne soit pas affectée par le bruit résultant du produit de cellules affectées de codes dont l'orthogonalité n'est pas parfaite.

Par ailleurs, quand on fait appel à des codes dont l'orthogonalité est imparfaite, le bruit à la réception augmente avec le nombre de codes différents émis en même temps. Dans ces conditions, dans une réalisation, on fait dépendre la puissance affectée à chaque cellule du nombre de codes transmis simultanément et de leurs défauts d'orthogonalité.

Lorsqu'une cellule d'un émetteur est destinée à plusieurs organes récepteurs, la puissance affectée à la cellule sera la puissance nécessitée par la communication vers l'organe récepteur qui nécessite la plus grande puissance. De telles cellules sont, par exemple, celles qui sont émises par une station de gestion pour transmettre des informations de signalisation aux terminaux, en particulier distribuer les ressources aux divers terminaux, c'est-à-dire les fréquences porteuses et/ou les codes.

Dans un mode de réalisation permettant d'optimiser la gestion des ressources, lorsqu'on prévoit l'attribution d'une pluralité de codes pour des communications simultanées, l'attribution des codes est indépendante de la communication ou connexion. En d'autres termes, les cellules affectées à une même communication ou connexion peuvent être multipliées par des codes qui diffèrent d'un intervalle de temps à un autre. On confère ainsi un degré de liberté supplémentaire qui facilite la gestion des ressources. De même, la distribution temporelle des cellules affectées à une même communication peut varier.

La présente invention prévoit un procédé de transmission en mode asynchrone de données numériques composées de cellules dans lequel les ressources en communication de terminaux sont attribuées par une station de commande, et dans lequel la puissance totale affectée aux diverses communications ne devant pas dépasser une valeur déterminée, la puissance affectée à chaque cellule émise par un terminal ou par la station de commande est déterminée périodiquement.

Dans une réalisation, la puissance affectée à chaque cellule est déterminée à chaque apparition d'une cellule ou à chaque apparition d'un groupe de cellules.

Dans une réalisation, on fait dépendre la puissance affectée à chaque cellule des conditions de propagation entre l'émetteur et le récepteur.

Dans une réalisation, lorsqu'une cellule est transmise simultanément d'un émetteur vers plusieurs récepteurs, on affecte à cette cellule la puissance nécessitée par le récepteur qui demande la plus grande puissance.

Dans une réalisation, à chaque cellule d'une connexion, on affecte périodiquement une fréquence porteuse et/ou un code, cette fréquence porteuse et/ou ce code étant indépendant de la connexion.

Dans une réalisation, l'affectation de la fréquence porteuse et/ou du code est effectuée à l'apparition de chaque cellule ou à chaque fois qu'un groupe de cellules apparaît.

Dans une réalisation, un code étant affecté à chaque cellule, les codes utilisés sont orthogonaux.

Dans une réalisation, on fait dépendre la puissance affectée à chaque cellule du nombre de codes transmis simultanément et des défauts d'orthogonalité de ces codes.

Dans une réalisation, pour l'émission de la station vers les terminaux, chaque connexion est transmise sur une seule porteuse et sur une pluralité de codes.

Dans une réalisation, les communications sont du type ATM.

Dans une application, les communications sont relayées par des moyens de ré-émission à bord d'un satellite mobile, les terminaux et la station de commande se trouvant dans une zone terrestre.

Dans une réalisation, on fait dépendre la puissance de chaque cellule de la position du satellite.

Dans une réalisation, on fait dépendre la puissance affectée à chaque cellule d'une communication, de la position, dans la zone, d'une part, de l'émetteur et, d'autre part, du récepteur.

Dans une réalisation, on fait dépendre la puissance affectée à chaque cellule de la puissance totale des moyens de ré-émission du satellite.

Dans une réalisation, on fait dépendre la puissance affectée à chaque cellule de la puissance totale admissible au sol.

La présente invention prévoit en outre une application du procédé à un système de télécommunication dans lequel la station est reliée à des serveurs ou utilisateurs d'un réseau de télécommunication terrestre, les terminaux étant destinés à communiquer avec les serveurs ou utilisateurs du réseau terrestre par l'intermédiaire du satellite ou de la station.

D'autres caractéristiques et avantages de l'invention apparaîtront avec la description de certains de ses modes de réalisation, celle-ci étant effectuée en se référant aux dessins ci-annexés, sur lesquels :

la figure 1 est schéma d'un système de télécommunication auquel s'applique l'invention,
la figure 2 est un diagramme représentant un aspect du procédé selon l'invention,
la figure 3 est un schéma d'un dispositif pour la mise en oeuvre du procédé représenté sur la figure 2, et
la figure 4 est un diagramme illustrant le procédé selon l'invention.

L'exemple de réalisation de l'invention que l'on va décrire en relation avec les figures concerne principalement un système de télécommunication par l'intermédiaire de satellites formant une constellation à orbites basses ou moyennes.

Une constellation comprend un ensemble de satellites disposés sur une pluralité d'orbites et, sur chaque orbite, on prévoit plusieurs satellites. L'ensemble est tel qu'il puisse couvrir tout le globe terrestre ou une partie de celui-ci.

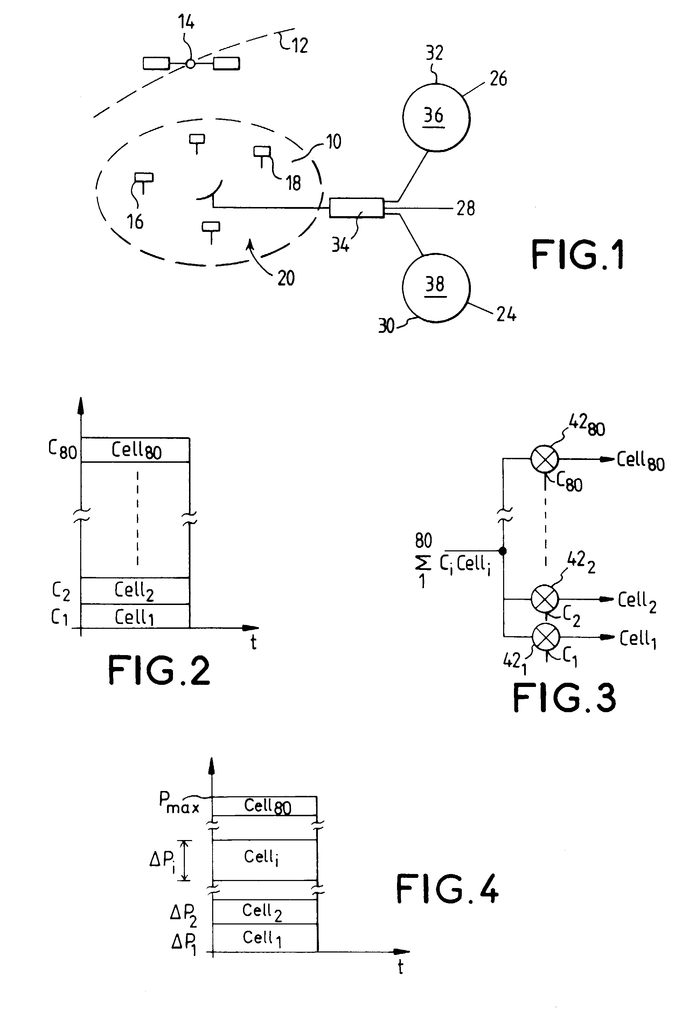

Dans ce système, le globe est divisé en zones et chaque zone 10 (figure 1) est associée à une orbite 12. A chaque instant, une zone 10 "voit" un satellite 14 de l'orbite 12.

Les équipements à bord de ce satellite sont destinés à établir des communications entre des terminaux 16, 18, etc. se trouvant dans la zone 10. Dans ce qui suit, les équipements de réception et de ré-émission à bord du satellite seront quelquefois désignés, de façon simplifiée, par le "satellite".

Dans l'exemple, il ne s'établit pas de communication directe entre les terminaux 16 et 18 par l'intermédiaire du satellite 14, mais les communications entre deux terminaux 16 et 18 sont relayées par une station de gestion ou commande, appelée aussi station de connexion 20. Autrement dit, une communication émise par le terminal 16 vers le terminal 18 est d'abord transmise, par l'intermédiaire du satellite 14, vers la station 20 et, ensuite, cette station 20 ré-émet cette communication vers le terminal 18, également par l'intermédiaire du satellite 14.

Le satellite 14 permet aussi d'établir des communications entre les terminaux 16, 18, etc. et des stations ou terminaux d'un réseau de télécommunication terrestre 22 relié à la station de connexion 20. Les terminaux du réseau terrestre 22 sont constitués, par exemple, de serveurs 24, 26, 28 et d'utilisateurs 30, 32. Dans l'exemple, la station de connexion 20 comporte un commutateur ATM 34 et le réseau 22 comprend une partie 36 à large bande et une partie 38 à bande étroite.

La communication par l'intermédiaire d'un satellite 14 à orbite basse ou moyenne présente, par rapport à un système de télécommunication à satellite géostationnaire, l'avantage de minimiser le temps de transmission, ce qui est particulièrement utile pour les communications qui doivent s'effectuer en temps réel.

Pour une orbite 12 d'altitude environ 1000 km et une zone 10 de diamètre 700 km environ, le satellite 14 reste en vue de la zone 10 pendant approximativement dix minutes. Ensuite, un autre satellite (non montré), sur la même orbite ou sur une autre orbite, prend le relais.

Les utilisations d'un tel système sont diverses : la téléphonie, la télécopie, la consultation de bases de données, les services multimédia interactifs, les vidéoconférences et le courrier électronique.

Ces communications diverses nécessitent des qualités de service différentes. Le nombre de qualités de service nécessaire peut varier en fonction de l'organe émetteur. Ainsi, dans l'exemple, pour les émissions de la station 20, on prévoit quatre qualités de services, à savoir :

une qualité à débit constant CBR ("Constant Bit Rate") utilisée pour les communications téléphoniques ou les télécopies,
une qualité à débit variable mais en temps réel VBR-RT ("Variable Bit Rate-Real Time"), ce type de communication correspondant par exemple à des visioconférences,
une qualité à débit variable mais non en temps réel VBR-nRT, et, enfin,
une qualité à débit non spécifié UBR ("Unspecified Bit Rate") qui correspond par exemple à une transmission de courrier électronique (type Internet).

A chacune de ces qualités de service, est associé un retard maximal entre l'émission et la réception, le retard maximal admissible étant le plus faible pour la qualité CBR, plus important pour la qualité VBR-RT, et encore plus important pour la qualité VBR-nRT. Par contre, on n'impose pas de valeur maximale au retard pour la qualité de service UBR.

Dans l'exemple, pour les communications émises par les terminaux 16, 18, etc., on prévoit trois qualités de service dont les deux premières correspondent à des temps de retard maxima fixés entre émission et réception, mais de valeurs différentes, et dont la troisième correspond à la qualité UBR.

Quel que soit le nombre de qualités de service, à chacune de ces dernières, on affecte une priorité, la priorité la plus importante étant attribuée à la qualité CBR et la priorité la plus basse à la qualité UBR.

L'utilisation d'une transmission en mode asynchrone permet de répartir les ressources de trafic de façon à respecter les priorités.

Dans une transmission asynchrone du type ATM, les informations sont transmises sous forme de cellules de durée invariable par exemple 1,5 ms, appelée "intervalle de temps". Chaque cellule comprend 384 bits utiles et 40 bits d'en-tête.

Les communications entre la station de connexion 20 et les terminaux 16, 18, etc. peuvent s'effectuer par ailleurs sur une pluralité de fréquences porteuses. En outre, pendant chaque intervalle de temps, une cellule est affectée d'un code choisi parmi N codes (80, dans l'exemple), tous orthogonaux entre eux.

La capacité de communication du système est d'autant plus importante qu'est grand le nombre de porteuses et qu'est élevé le nombre de codes.

Sur le diagramme de la figure 2, on a représenté en abscisses le temps, et en ordonnées, les codes $C_i$ : $C_1$, $C_2$, $C_3$ ... $C_{80}$. Les cellules sont notées $cell_1$, $cell_2$ ... $cell_{80}$, l'indice affecté à la cellule correspondant au numéro du code qui lui est attribué.

Un signal S transmis de la station 20 vers le terminal 16 ou du terminal 16 vers la station 20 est ainsi un signal de la forme :

$$S = \sum_{i=1}^{i=80} C_i cell_i \qquad (1).$$

Pour le décodage, à la réception, de ce signal, on utilise le dispositif représenté sur la figure 3 qui comprend des multiplicateurs $42_1$, $42_2$, ..., $42_{80}$ dont chacun présente une première entrée recevant le signal S et une seconde entrée sur laquelle est appliqué un code $C_1$, $C_2$, ... ou $C_{80}$.

Dans ces conditions, à la sortie du multiplicateur $42_i$, on obtient la cellule $cell_i$ du fait des propriétés d'orthogonalité des codes, c'est-à-dire :

$$C_i.C_j = 0 \text{ si } i \neq j, \text{ et } C_i.C_j = 1, \text{ si } i = j.$$

Selon un aspect de l'invention, pour respecter les priorités, pour chaque intervalle de temps (1,5 ms) ou pour chaque groupe d'intervalles de temps, le programme de gestion des transmissions décide d'attribuer à chaque cellule une porteuse déterminée et un code déterminé, cette attribution ne dépendant pas de la connexion. En d'autres termes, les cellules d'une même connexion peuvent se trouver sur des porteuses et/ou des codes qui diffèrent d'un intervalle de temps, ou d'un groupe d'intervalles de temps, à un autre.

Cette caractéristique permet d'utiliser au maximum les ressources disponibles. En effet, si une connexion donnée était toujours affectée du même code, ce dernier ne serait pas forcément utilisé de façon optimale. Par exemple, si la connexion en question contient des silences, le code ne serait pas utilisé pendant ces périodes de silence, alors qu'avec l'invention, pendant les périodes de silence d'une connexion on peut utiliser le code pour d'autres communications ou connexions.

Le système de télécommunication doit aussi tenir compte de contraintes particulières liées au fait que les communications s'effectuent par l'intermédiaire de satellites mobiles 14. En effet, le besoin en puissance pour chaque communication varie continuellement, car la puissance nécessaire dépend d'une pluralité de facteurs.

Un premier facteur est la distance de communication. Ainsi, quand le satellite est au nadir de la zone 10, les distances sont minimales et le besoin en puissance est minimum. Par contre, quand le satellite entre dans le champ de vision de la zone, ou s'apprête à en sortir, les distances sont plus importantes et le besoin en puissance pour les communications augmente. De plus, pour une position donnée du satellite, la distance de la station 20 au terminal dépend de la position de ce dernier dans la zone ; par exemple, si le satellite est au nadir de la zone, en général au droit de la station 20, la distance de cette dernière à un terminal qui lui est proche est sensiblement moins importante que la distance de cette station à un terminal proche du bord de la zone.

Un autre facteur dont dépend la puissance pour chaque communication est constitué par les conditions de propagation qui peuvent varier dans le temps, par exemple du fait d'un changement météorologique. Ainsi, pour une transmission traversant un espace nuageux ou pluvieux, il faudra plus de puissance que pour une transmission par beau temps.

Un autre facteur encore est constitué par la puissance que peuvent fournir les moyens d'émission et de réception à bord du satellite 14. En particulier, si le satellite 14 est affecté à plusieurs zones, la gestion des communications sur ces diverses zones peut imposer une variation de la répartition de la puissance sur ces zones. La puissance émise par le satellite peut être également limitée par des contraintes d'environnement ; par exemple, il peut être imposé que, dans la zone, ou dans une partie de la zone, les signaux reçus ne doivent pas présenter une puissance dépassant une limite déterminée.

Ainsi, pour tenir compte de ces contraintes, dans le procédé selon l'invention, on affecte à chaque cellule une puissance qui est déterminée périodiquement, par exemple à chaque intervalle de temps (durée d'une cellule) ou à chaque groupe d'intervalles de temps, notamment à chaque trame (toutes les 24 ms).

Pour l'émission d'un terminal 16, 18, etc. vers la station de connexion 20, la puissance peut être déterminée dans ce terminal, ou elle peut être déterminée dans et par la station de connexion 20. Dans ce dernier cas, la station 20 adresse aux divers terminaux une indication sur la puissance de chaque cellule à émettre, par exemple en même temps qu'elle adresse aux terminaux les ressources (fréquences porteuses et codes) qu'ils doivent utiliser pour les communications.

Les signaux d'attribution de ressources et, éventuellement, de puissance qui sont émis par la station 20 vers les terminaux 16, 18, etc. sont, dans l'exemple, constitués de cellules qui sont adressées simultanément à plusieurs terminaux ou à l'ensemble des terminaux. Dans ce cas, le besoin en puissance n'est pas forcément le même pour tous les terminaux 16, 18, etc., parce que, d'une part, les distances peuvent être différentes et, d'autre part, les conditions de propagation ne sont pas toujours uniformes au-dessus de la zone. Par exemple, une partie de la zone est sans nuage, alors qu'une autre partie de la zone est couverte de nuages et pluvieuse.

Dans cette situation, la puissance retenue pour une cellule émise simultanément vers plusieurs terminaux, sera la puissance qui correspond à la communication la moins favorable, c'est-à-dire celle qui réclame la puissance la plus élevée.

Par ailleurs, la station de connexion transmet des données proprement dites vers chacun des terminaux. Dans ce cas, on émet simultanément les divers signaux vers les terminaux individuels, une porteuse et un code étant affectés à chaque terminal.

Dans ces conditions, pour une émission de la station de connexion 20 vers les terminaux 16, 18, etc., on détermine, pour chaque terminal, le besoin en puissance (qui dépend de la position du satellite, de la position du terminal et des conditions de propagation), cette détermination étant effectuée de façon périodique, par exemple à chaque intervalle de temps ou pour un groupe d'intervalles de temps, et on affecte cette puissance aux cellules destinées à être émises par la station 20 vers le terminal déterminé.

Ainsi, pendant un intervalle de temps donné, la station de connexion 20 émet des cellules de puissances différentes. Cette propriété est représentée sur le diagramme de la figure 4 sur lequel le temps a été porté en abscisses et la puissance en ordonnées. Dans ce diagramme, les cellules $cell_1$, $cell_2$ ..., $cell_i$ ... occupent sur l'axe des ordonnées une hauteur $\Delta P_1$, $\Delta P_2$, ..., $\Delta P_i$ ... qui correspond à la puissance dont elles ont besoin.

Par ailleurs, la puissance disponible, qui est surtout fonction de la puissance d'émission des moyens à bord du satellite, est limitée à une valeur Pmax qui peut varier dans le temps, comme indiqué ci-dessus. Dans ces conditions on comprend que, pour chaque intervalle de temps, ou pour chaque groupe d'intervalles de temps, le nombre de cellules émises par la station de connexion vers les terminaux n'est pas constant. En effet, le nombre de cellules par intervalle de temps ou groupe d'intervalles de temps sera plus faible pour des mauvaises conditions de propagation ou lorsque la puissance disponible totale Pmax sera plus faible.

Dans l'exemple, la gestion des signaux de données émis par la station de connexion vers les terminaux 16, 18, etc. s'effectue individuellement par porteuse. Autrement dit, une connexion restera toujours sur la même porteuse, même si ses cellules peuvent être distribuées sur des codes différents. Dans ce cas, la puissance Pmax indiquée ci-dessus correspond à la puissance Pmax attribuée à cette porteuse. Toutefois, en variante, il est possible d'effectuer une gestion globale, les cellules d'une même connexion pouvant alors se trouver, non seulement sur des codes différents, mais aussi sur des porteuses différentes.

Par ailleurs, quand il y a un grand nombre de terminaux, au cours de chaque intervalle de temps, il n'est pas, en général, possible de servir tous les terminaux. Dans ce cas, pendant un intervalle de temps donné, on servira les N premiers terminaux, pendant l'intervalle de temps suivant, on servira les P terminaux suivants (N et P pouvant varier d'un intervalle de temps, ou groupe d'intervalles de temps, à un autre compte tenu des priorités ou des contraintes sur la puissance), et ainsi de suite. L'ordre dans lequel les terminaux sont servis dépendra aussi des priorités.

Dans une réalisation, à chaque intervalle de temps, un seul code est affecté à chaque terminal.

Dans une autre réalisation, chaque intervalle de temps est dédié à la transmission vers un seul terminal, tous les codes étant dédiés à ce terminal.

En variante encore, on prévoit de ne servir qu'un nombre limité de terminaux à chaque intervalle de temps et, pendant cet intervalle de temps, on attribue plusieurs codes à chaque terminal.

Dans l'exemple, les cellules des connexions pour les signaux de données devant être émis de la station 20 vers chacun des terminaux 16, 18, etc., sont rangées, comme indiqué ci-dessus, dans quatre files d'attente de priorités différentes. La file d'attente de priorité la plus élevée assure un temps de retard d'au plus 100 ms entre l'émission et la réception, la seconde file d'attente assure un temps de retard d'au plus, par exemple, 200 ms, la troisième file d'attente, un temps de retard d'au maximum 400 ms, tandis qu'il n'y a pas de garantie de débit minimum (ou de temps de retard minimum) pour la quatrième file d'attente.

Toutefois, pour éviter un blocage, notamment pour les cellules ayant la priorité la plus basse, on détermine le temps pendant lequel chaque cellule se trouve dans une file d'attente et, si, au bout d'un temps déterminé, une ou plusieurs cellules n'ont pas encore été transmises, alors cette cellule (ou ces cellules) est transférée dans une autre file d'attente de type FIFO (premier entré, premier sorti). Le temps déterminé, au bout duquel les cellules sont transférées d'une file d'attente principale dans une file d'attente FIFO, dépend de la priorité ; il est le plus bas pour les files d'attente ayant la priorité la plus élevée.

Ainsi, pour chaque priorité, on prévoit deux files d'attente, une file d'attente principale et une file d'attente de type FIFO. Les files d'attente de type FIFO sont prioritaires par rapport aux files d'attente principales. Autrement dit, la file d'attente FIFO de la priorité la plus basse est prioritaire par rapport à la file d'attente principale de la priorité la plus élevée. Par contre, l'ordre de priorité est respecté entre les diverses files d'attente FIFO.

La gestion des communications émises par les terminaux 16, 18, etc. vers la station de connexion est analogue à celle qui s'effectue au sens inverse, c'est-à-dire de la station de connexion vers ces terminaux. Toutefois, cette gestion est facilitée par le fait que les terminaux communiquent seulement avec la station 20. Ainsi, à chaque instant, toutes les cellules d'un même terminal sont affectées de la même puissance, la puissance de chaque cellule étant cependant variable, comme expliqué ci-dessus pour les communications de la station de connexion vers les terminaux.

Dans l'exemple, la gestion des communications émises par des terminaux vers la station 20 se distingue de la gestion des communications émises par la station 20 par le fait, d'une part, qu'elle concerne plusieurs porteuses simultanément, par exemple trois, et que, d'autre part, le nombre de files d'attente peut être plus réduit. On prévoit ainsi trois files d'attente, alors qu'on prévoit quatre files d'attente pour les communications depuis la station 20.

Le système de télécommunication asynchrone à cellules de puissances variables et pour lequel les ressources en codes et, éventuellement, en porteuses, sont attribuées en fonction des priorités, permet une maximisation des ressources, c'est-à-dire qu'il permet de maximiser le débit d'informations, tout en respectant les contraintes affectant le système à satellites mobiles.

L'invention n'est pas limitée aux télécommunications par satellite mobile. Elle s'applique à chaque fois que des variations de puissance peuvent se produire dans un système de transmission numérique asynchrone, notamment un système dans lequel les ressources sont attribuées périodiquement par une station de commande. Une telle situation peut intervenir aussi pour un système à satellite(s) géostationnaire(s) ou pour un système radio.

## Revendications

1. Procédé de transmission en mode asynchrone de données numériques composées de cellules dans lequel les ressources en communication de terminaux (16, 18) sont attribuées par une station de commande (20), caractérisé en ce que, la puissance totale affectée aux diverses communications ne devant pas dépasser une valeur déterminée, la puissance ($\Delta p_i$) affectée à chaque cellule émise par un terminal ou par la station de commande est déterminée périodiquement.

2. Procédé selon la revendication 1, caractérisé en ce que la puissance affectée à chaque cellule est déterminée à chaque apparition d'une cellule ou à chaque apparition d'un groupe de cellules.

3. Procédé selon la revendication 1 ou 2, caractérisé en ce qu'on fait dépendre la puissance affectée à chaque cellule des conditions de propagation entre l'émetteur et le récepteur.

4. Procédé selon l'une quelconque des revendications précédentes, caractérisé en ce que, lorsqu'une cellule est transmise simultanément d'un émetteur vers plusieurs récepteurs, on affecte à cette cellule la puissance nécessitée par le récepteur qui demande la plus grande puissance.

5. Procédé selon l'une quelconque des revendications précédentes, caractérisé en ce que, à chaque cellule d'une connexion, on affecte périodiquement une fréquence porteuse et/ou un code, cette fréquence porteuse et/ou ce code étant indépendant de la connexion.

6. Procédé selon la revendication 5, caractérisé en ce que l'affectation de la fréquence porteuse et/ou du code est effectuée à l'apparition de chaque cellule ou à chaque fois qu'un groupe de cellules apparaît.

7. Procédé selon la revendication 5 ou 6, caractérisé en ce qu'un code étant affecté à chaque cellule, les codes utilisés sont orthogonaux.

8. Procédé selon la revendication 7, caractérisé en ce qu'on fait dépendre la puissance affectée à chaque cellule du nombre de codes transmis simultanément et des défauts d'orthogonalité de ces codes.

9. Procédé selon l'une quelconque des revendications 5 à 8, caractérisé en ce que, pour l'émission de la station vers les terminaux, chaque connexion est transmise sur une seule porteuse et sur une pluralité de codes.

10. Procédé selon l'une quelconque des revendications précédentes, caractérisé en ce que les communications sont du type ATM.

11. Procédé selon l'une quelconque des revendications précédentes, caractérisé en ce que les communications sont relayées par des moyens de ré-émission à bord d'un satellite (14) mobile, les terminaux et la station de commande se trouvant dans une zone terrestre (10).

12. Procédé selon la revendication 11, caractérisé en ce qu'on fait dépendre la puissance de chaque cellule de la position du satellite (14).

13. Procédé selon la revendication 1 1 ou 12, caractérisé en ce qu'on fait dépendre la puissance affectée à chaque cellule d'une communication de la position, dans la zone, d'une part, de l'émetteur et, d'autre part, du récepteur.

14. Procédé selon l'une quelconque des revendications 11 à 13, caractérisé en ce qu'on fait dépendre la puissance affectée à chaque cellule de la puissance totale des moyens de ré-émission du satellite (14).

15. Procédé selon l'une quelconque des revendications 11 à 14, caractérisé en ce qu'on fait dépendre la puissance affectée à chaque cellule de la puissance totale admissible au sol.

16. Application du procédé selon l'une quelconque des revendications 11 à 15 à un système de télécommunication dans lequel la station (20) est reliée à des serveurs ou utilisateurs d'un réseau de télécommunication terrestre (22), les terminaux étant destinés à communiquer avec les serveurs ou utilisateurs du réseau terrestre par l'intermédiaire du satellite ou de la station (20).

FIG.1

FIG.2

FIG.3

FIG.4

Office européen
des brevets

**RAPPORT DE RECHERCHE EUROPEENNE**

Numéro de la demande

EP 99 40 2602

| | **DOCUMENTS CONSIDERES COMME PERTINENTS** | | |
|---|---|---|---|
| Catégorie | Citation du document avec indication, en cas de besoin, des parties pertinentes | Revendication concernée | **CLASSEMENT DE LA DEMANDE (Int.Cl.7)** |
| Y | AKYILDIZ I F ET AL: "SATELLITE ATM NETWORKS: A SURVEY" IEEE COMMUNICATIONS MAGAZINE, vol. 35, no. 7, 1 juillet 1997 (1997-07-01), pages 30-43, XP000695129 ISSN: 0163-6804 * figures 1,2,9 * * page 34, colonne 2, ligne 1 - ligne 49 * | 1,3,10, 11,16 | H04Q11/04 |
| Y<br><br>A | EP 0 805 568 A (TRW INC) 5 novembre 1997 (1997-11-05) * abrégé *<br><br>* figures 1,2A-1,2B * * colonne 1, ligne 45 - ligne 57 * * colonne 2, ligne 12 - ligne 24 * * colonne 2, ligne 41 - colonne 3, ligne 24 * * colonne 6, ligne 37 - ligne 59 * * revendication 1 * | 1,3,10, 11,16 2,4, 12-15 | |
| A | BITO J ET AL: "Multipath fading effects on integrated video, voice and data transmission in hybrid-code BPSK-DS/CDMA systems" SIGNAL PROCESSING. IMAGE COMMUNICATION, vol. 12, no. 2, 1 avril 1998 (1998-04-01), page 183-192 XP004121508 ISSN: 0923-5965 * abrégé * * page 186, colonne 2, alinéa 3 * * page 187, colonne 2, alinéa 4 * | 1,5,7,9 | **DOMAINES TECHNIQUES RECHERCHES (Int.Cl.7)**<br><br>H04Q<br>H04B |

Le présent rapport a été établi pour toutes les revendications

| Lieu de la recherche | Date d'achèvement de la recherche | Examinateur |
|---|---|---|
| LA HAYE | 28 janvier 2000 | Lamadie, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 40 2602

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-01-2000

| Document brevet cité au rapport de recherche | Date de publication | Membre(s) de la famille de brevet(s) | | Date de publication |
|---|---|---|---|---|
| EP 0805568 A | 05-11-1997 | US | 5924015 A | 13-07-1999 |
| | | CA | 2202845 A | 30-10-1997 |
| | | DE | 69700102 D | 04-03-1999 |
| | | DE | 69700102 T | 02-06-1999 |
| | | JP | 2974981 B | 10-11-1999 |
| | | JP | 10098425 A | 14-04-1998 |

EPO FORM P0460

Pour tout renseignement concernant cette annexe : voir Journal Officiel de l'Office européen des brevets, No.12/82